# EUROPÄISCHE PATENTSCHRIFT

(11) **EP 3 574 049 B1**
(45) Veröffentlichungstag und Bekanntmachung des Hinweises auf die Patenterteilung: **18.11.2020**
(21) Anmeldenummer: 18702465.8
(22) Anmeldetag: 26.01.2018
(51) Int. Cl.: C08L 77/02

(54) **SCHWARZ EINGEFÄRBTE POLYAMID-ZUSAMMENSETZUNG, DEREN HERSTELLUNG UND VERWENDUNG**
BLACK COLOURED POLYAMIDE COMPOSITION, ITS PREPARATION AND USE
COMPOSITION DE POLYAMIDE COLORE NOIR, SA PRODUCTION ET UTILISATION

(30) Priorität: 30.01.2017 EP 17153693
(43) Veröffentlichungstag der Anmeldung: 04.12.2019
(73) Patentinhaber: BASF SE, 67056 Ludwigshafen am Rhein (DE)
(72) Erfinder: CREMER, Jens, 67056 Ludwigshafen (DE); WAGNER, Sebastian, 67056 Ludwigshafen (DE)
(86) Internationale Anmeldenummer: PCT/EP2018/051951
(87) Internationale Veröffentlichungsnummer: WO 2018/138256

(56) Entgegenhaltungen:
- EP-A1- 2 716 716

## Beschreibung

### Hintergrund der Erfindung

Die vorliegende Erfindung betrifft eine schwarz eingefärbte Polyamid-Zusammensetzung, die einen chromhaltigen Azofarbstoff in Form eines Chromkomplexes und Ruß sowie Glasfasern enthält, die Herstellung einer solchen Polyamid-Zusammensetzung und deren Verwendung zur Herstellung von schwarz eingefärbten laserbeschreibbaren Polyamid-Formkörpern.

### Stand der Technik

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die meisten technisch bedeutsamen Polyamide sind teilkristalline oder amorphe thermoplastische Polymere, die sich durch eine hohe Temperaturbeständigkeit auszeichnen. Die Einfärbung und gegebenenfalls die weitere Verarbeitung dieser Polyamide erfolgt bei hohen Temperaturen von in der Regel über 240°C und teilweise über 300°C. Dies stellt an die verwendeten Farbmittel, ob Pigmente oder Farbstoffe, erhöhte Anforderungen im Vergleich zu Polymeren, die bei niedrigeren Temperaturen verarbeitet werden, wie PVC oder Polyethylen.

Farbstoffe neigen beim Einsatz speziell in teilkristallinen Polyamiden zu einer unerwünschten Migration an die Oberfläche der eingefärbten Formkörper oder Fasern. Bei Formkörpern und insbesondere Fasern führt dies zu einem Ausbluten des Farbstoffs, einer verminderten Reibechtheit und zu Verfärbungen von Materialien, die mit den Fasern in Kontakt kommen. Aufgrund der Eigenschaft zu migrieren sind konventionelle Farbstoffe nur bedingt zum Einsatz in der Polymermatrix von Polyamiden geeignet. Dahingegen sind Pigmente in der Regel bezüglich Migration problemlos verwendbar.

Für die Schwarzeinfärbung von Thermoplasten und speziell Polyamiden kommen üblicherweise Ruße (z.B. Pigment Black 7) oder nur schwach migrierende Farbstoffe wie Solvent Black 7 (Nigrosin) oder Solvent Black 5 (Nigrosin) zum Einsatz.

Die WO 2015/036526 beschreibt schwarze thermoplastische Formmassen, die ein Polymer, ausgewählt unter Styrol-Copolymeren, PMMA und anderen Polyalkylmethacrylaten, Polycarbonaten und Polyestercarbonaten sowie einen Pigmentruß enthalten.

Die Laserbeschriftung zur Kennzeichnung von Formteilen aus Kunststoff hat in den letzten Jahren immer mehr an Bedeutung gewonnen, da diese gegenüber alternativen Verfahren wie dem Aufbringen von Etiketten wirtschaftlicher ist. Durchsetzen konnte sich die Laserbeschriftung auch deswegen, weil es sich um ein sehr flexibles Verfahren mit der Möglichkeit der Verwendung verschiedenster Schriftarten und -formen sowie des Aufbringens verschiedener Codes, wie z.B. QR-Codes, handelt. Außerdem werden Bauteile durch das Laserbeschriften permanent beschrieben, so dass im Unterschied zu aufgeklebten Etiketten keine Gefahr des selbständigen Ablösens besteht.

Eine der Hauptanwendungen der Laserbeschriftungen ist das Aufbringen von hellen Beschriftungen auf dunklem bzw. schwarzem Untergrund. Für diese Art der Beschriftung haben sich Additive bewährt, die durch Absorption der Laserenergie das lokale Aufschäumen der Polymermatrix bewirken.

Hierbei hat sich als Additiv insbesondere Ruß durchgesetzt, wie es beispielsweise in der EP-A-0-053-256 oder der WO 94/12352 beschrieben ist. Dieses erlaubt kosteneffektiv die Aufbringung einer hellen, leicht bräunlichen Schrift auf schwarzem Untergrund.

Bei Polyamiden hat sich ebenfalls Ruß als universelles Additiv für die Schwarzeinfärbung und auch für die Laserbeschreibbarkeit etabliert. Jedoch haben Ruß-eingefärbte Polyamide für gewöhnlich den Nachteil, dass sie eine raue und nicht besonders tiefschwarze Oberfläche besitzen und dass das Fließverhalten bei der Verarbeitung im Spritzgussverfahren nicht besonders gut ist.

Ruße zeigen in der Regel gute Eigenschaften bei der Einfärbung von Thermoplasten, wie Polyamiden. Bei einem Einsatz in teilkristallinen Polymeren wirken sie jedoch als Nukleierungsmittel, d.h. sie führen bei der Einarbeitung in das geschmolzene Polymer zu einer Erhöhung der Keimzahl und beeinflussen somit das Kristallisationsverhalten. Der Einsatz von Rußen führt in teilkristallinen Polyamiden zu unerwünschten Veränderungen im Dimensionsverhalten der aus dem Polyamid hergestellten Teile. Dies ist insbesondere problematisch bei Verwendungen, die eine hohe Formstabilität erfordern, z.B. im Automobilbereich bei Rahmenteilen, Abdeckungen, etc.

In vielen Einsatzbereichen für schwarz eingefärbte Polyamide besteht ein Bedarf an Produkten mit hochglänzenden Oberflächen, da diese beispielsweise vom Verbraucher aus ästhetischen Gründen bevorzugt werden. Der Einsatz von Ruß führt zu einer Streuung des auf die gefärbte Kunststoffoberfläche treffenden Lichts und somit zu einem Glanzverlust. Gleichzeitig wirkt die Lichtstreuung aufhellend, so dass mit Ruß keine tiefschwarzen Formkörper hergestellt werden können.

Als Alternative zur Ruß-Einfärbung hat sich die Verwendung des organischen Farbstoffs Nigrosin (Solvent Black 7 - CAS: 8005-02-5) bewährt, da dieser den Erhalt von tiefschwarzen, glatten Oberflächen bei gleichzeitig gutem Fließverhalten des entsprechend Polyamid-Compounds erlaubt. Nachteilig bei der Nigrosin-Einfärbung ist, dass die Laserbeschreibbarkeit unter dem sehr schlechten Kontrast leidet.

Nigrosin ist eine Mischung aus synthetischen schwarzen Farbmitteln und wird durch Erhitzen von Nitrobenzol, Anilin und Anilinhydrochlorid in der Gegenwart eines Eisen- oder Kupfer-Katalysators gewonnen. Nigrosine treten in verschiedenen Ausführungen auf (wasserlöslich, alkohollöslich und öllöslich). Ein typisches wasserlösliches Nigrosin ist Acid Black 2 (C.I. 50420), ein typisches alkohollösliches Nigrosin ist Solvent Black 5 (C.I. 50415), und ein typisches öllösliches Nigrosin ist Solvent Black 7 (C.I. 50415:1).

Nigrosin ist jedoch im Hinblick auf eine möglicherweise gesundheitsschädliche Wirkung nicht unbedenklich. So können z.B. herstellungsbedingt Reste von Anilin und Nitrobenzol im Produkt verbleiben, und es besteht die Gefahr der Entstehung von unerwünschten Zersetzungsprodukten bei der nachfolgenden Verarbeitung mittels Extrusionsverfahren oder Spritzgussverfahren oder Spinnverfahren.

Kombinationen von Ruß und Nigrosin ermöglichen zwar relativ gute Oberflächengüten und Fließfähigkeiten, jedoch sind diese Eigenschaften insgesamt schlechter als bei reinen Nigrosin-Varianten. Dies gilt auch für die Laserbeschreibbarkeit, denn es ist auch bei einer Kombination aus Ruß und Nigrosin eine Beschriftung entsprechender Bauteile möglich. Es lassen sich dabei jedoch nur geringe Kontrastwerte erzielen.

Die Verwendung von Ruß in Kombination mit weiteren organischen Farbstoffen ist in EP-A-0-675-168 beschrieben. Hier sind jedoch nur verschiedenfarbige Beschriftungen beschrieben, ohne auf die Oberflächengüte und Fließeigenschaften der Compounds einzugehen.

EP 2 716 716 A1 betrifft Polyamid-Formmassen und deren Verwendung bei der Herstellung von Formkörpern. Die Polyamid-Formmassen enthalten Nigrosin und zumindest ein Nukleierungsmittel, wobei Ruß ausgeschlossen ist. Als Nukleierungsmittel werden beispielsweise Kaolin oder Talk eingesetzt. Auf die Mitverwendung weiterer organischer Farbstoffe gibt es keinen Hinweis.

Der vorliegenden Erfindung liegt die Aufgabe zu Grunde, neue schwarz eingefärbte Polyamid-Zusammensetzungen bereit zu stellen, die neben einer guten Laserbeschreibbarkeit mit hohem Kontrast auch eine gute Oberflächengüte und gute Fließeigenschaften besitzen. Zudem sollen die zuvor genannten Nachteile der bisher eingesetzten Farbmittel vermieden werden.

Im Rahmen dieser Erfindung wurde nun gefunden, dass durch die Verwendung einer Kombination von Ruß und dem organischen Farbstoff Solvent Black 28 (CAS: 12237-23-9) Polyamid-Compounds hergestellt werden können, die neben einer guten Laserbeschreibbarkeit mit hohem Kontrast auch eine gute Oberflächengüte und gute Fließeigenschaften besitzen.

Es wurde gefunden, dass diese Aufgabe gelöst wird, wenn man zum Einfärben von Polyamid-Zusammensetzungen den Chromkomplexfarbstoff mit der Bezeichnung Solvent Black 28 einsetzt.

### Zusammensetzung der Erfindung

Ein erster Gegenstand der Erfindung ist eine Polyamid-Zusammensetzung, enthaltend
a) 34,98 bis 89,98 Gew.-% wenigstens eines synthetischen Polyamids als Komponente A und
b) 0,01 bis 1,0 Gew.% eines Chromkomplexfarbstoffes, ausgewählt unter den Verbindungen der Formeln A1), A2) und A3) und Mischungen aus 2 oder 3 dieser Verbindungen 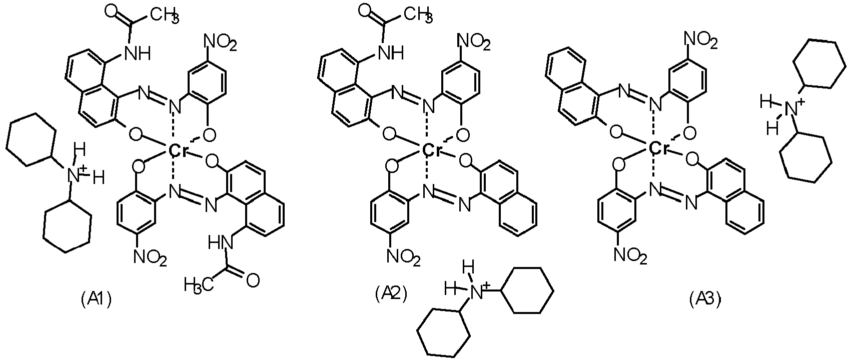 als Komponente B,
c) 0,01 bis 1 Gew.-% Ruß als Komponente C,
d) 10 bis 65 Gew.-% Glasfasern als Komponente D,
e) 0 bis 50 Gew.-% weiterer Zusatzstoffe als Komponente E,
wobei sich die Mengenangaben, deren Summe 100 Gew.-% ergibt, auf die gesamte Zusammensetzung beziehen und die Zusammensetzung maximal 0,05 Gew.-% Nigrosin enthält.

Ein weiterer Gegenstand der Erfindung ist die Verwendung einer Polyamid-Zusammensetzung, wie zuvor und im Folgenden definiert, zur Herstellung von schwarz eingefärbten Polyamid-Formkörpern mit hoher Temperaturstabilität und guter Laserbeschreibbarkeit.

Ein weiterer Gegenstand der Erfindung ist ein Formkörper, hergestellt aus einer erfindungsgemäßen Polyamid.-Formmasse, wie zuvor und im Folgenden definiert.

Ein weiterer Gegenstand der Erfindung ist ein Verfahren zur Herstellung einer Polyamidzusammensetzung, wie zuvor und im Folgenden definiert, bei dem man wenigstens ein synthetisches Polyamid A, wenigstens einen Chromkomplexfarbstoff B, Ruß C und gegebenenfalls weitere Additive unter Erwärmung auf eine Temperatur im Bereich von 160 bis 340°C miteinander vermischt.

Insbesondere eignet sich die erfindungsgemäße Polyamid-Zusammensetzung zur Herstellung von laserbeschreibbaren Formteilen.

### Beschreibung der Erfindung

Die Erfindung weist die folgenden Vorteile auf:
- Der erfindungsgemäß eingesetzte Chromkomplexfarbstoff wirkt im Wesentlichen nicht als Nukleierungsmittel und führt somit nicht zu einer relevanten Veränderung des Kristallisationsverhaltens des damit eingefärbten Polyamids. Somit können unerwünschte Veränderungen im Dimensionsverhalten der aus den eingefärbten Polyamiden hergestellten Formkörper vermieden werden.
- Der erfindungsgemäß eingesetzte Chromkomplexfarbstoff zeigt in teilkristallinen Polyamiden weiterhin keine unerwünschte Migration. Fasern auf Basis der erfindungsgemäßen Polyamid-Zusammensetzung zeichnen sich durch geringes Ausbluten und eine hohe Reibechtheit aus.
- Der erfindungsgemäß eingesetzte Chromkomplexfarbstoff ist toxikologisch deutlich unbedenklicher als beispielsweise Nigrosin.
- Die erfindungsgemäß eingefärbten Polyamide und daraus hergestellte Formkörper und Fasern zeichnen sich durch sehr gute Farbechtheit, sehr gute Temperaturstabilität und/oder eine sehr gute Verarbeitbarkeit aus. Dabei ist insbesondere die hohe Temperaturbeständigkeit der mit Solvent Black 28 eingefärbten Polyamide überraschend. Im Gegensatz dazu zeigte Solvent Black 28 beim Versuch der Massefärbung von Polyethylen eine völlig unzureichende Temperaturstabilität, die eine Verarbeitung bei Temperaturen bereits ab 160 °C unmöglich machte.
- Mit dem erfindungsgemäß eingesetzten Chromkomplexfarbstoff lassen sich Produkte mit hochglänzenden Oberflächen herstellen. Des Weiteren ist auch die Herstellung von tiefschwarzen Polyamid-Produkten möglich.
- Die Kombination des erfindungsgemäß eingesetzten Chromkomplexfarbstoffes mit Ruß in den anspruchsgemäßen Mengen führt bei Polyamid-Formmassen zu einer guten Laserbeschreibbarkeit, da insbesondere ein hoher Kontrast und ein helles Schriftbild in den schwarz eingefärbten Formkörpern zugänglich sind. Diese Effekte treten besonders vorteilhaft in PA 6 und PA 66, insbesondere in PA 66, auf.
- Die mechanischen Eigenschaften der Polyamid-Formkörper werden durch die Kombination des Chromkomplexfarbstoffes mit Ruß nicht oder nur unwesentlich beeinträchtigt.
- Die Laserbeschreibbarkeit ist auch bei hohen Füllstoffanteilen an Glasfasern gegeben.
- Bei der erfindungsgemäßen Kombination von Chromkomplexfarbstoff mit Ruß kann auf die Mitverwendung von Nigrosin verzichtet werden.

Die Zusammensetzungen enthalten Nigrosin in nur sehr geringen Mengen von maximal 0,05 Gew.-%, vorzugsweise maximal 0,03 Gew.-%, insbesondere 0,01 Gew.-%. Besonders bevorzugt enthalten die Zusammensetzungen kein Nigrosin.

Nachfolgend werden die einzelnen Komponenten der erfindungsgemäßen Zusammensetzungen näher erläutert.

Die nachfolgend angegebenen Mengenangaben beziehen sich auf die gesamte Zusammensetzung. Ihre Summe ergibt 100 Gew.-%. Die einzelnen Mengenangaben sind unabhängig von ihrer Schreibweise auf zwei Nachkommastellen genau angegeben zu verstehen. Die Angabe 15 Gew.-% entspricht damit der Angabe 15,00 Gew.-%.

### Komponente A

Als Komponente A enthalten die Zusammensetzungen 34,98 bis 89,98 Gew.-%, vorzugsweise 34,94 bis 89,94 Gew.-%, insbesondere 34,9 bis 89,9 Gew.-%, wenigstens eines synthetischen Polyamids.

### Synthetisches Polyamid der Komponente A

Die erfindungsgemäße Polyamid-Zusammensetzung, enthält als Komponente A wenigstens ein synthetisches Polyamid. Der Begriff "synthetisches Polyamid" wird im Rahmen der Erfindung breit verstanden. Er erfasst ganz allgemein Polymere, die wenigstens eine zur Polyamidbildung geeignete Komponente eingebaut enthalten, die ausgewählt ist unter Dicarbonsäuren, Diaminen, Salzen aus wenigstens einer Dicarbonsäure und wenigstens einem Diamin, Lactamen, ω-Aminosäuren, Aminocarbonsäurenitrilen und Mischungen davon. Neben den zur Polyamidbildung geeigneten Komponenten können die erfindungsgemäßen synthetischen Polyamide auch damit copolymerisierbare Monomere einpolymerisiert enthalten. Der Begriff "synthetisches Polyamid" umfasst keine natürlichen Polyamide, wie Peptide und Proteine, z.B. Haare, Wolle, Seide und Eiweiß.

Zur Bezeichnung der Polyamide werden im Rahmen der Erfindung zum Teil fachübliche Kurzzeichen verwendet, die aus den Buchstaben PA sowie darauffolgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z.B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z.B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet:
T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte, geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aliphatischen Dicarbonsäuren, cycloaliphatischen Dicarbonsäuren, aromatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, insbesondere Monomethylester, Dimethylester, Monoethylester oder Diethylester, vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkyl-komponenten, insbesondere Methylethylester, vor.

Bevorzugt sind die zur Polyamidbildung geeigneten Komponenten ausgewählt unter
pA) unsubstituierten oder substituierten aromatischen Dicarbonsäuren und Derivaten von unsubstituierten oder substituierten aromatischen Dicarbonsäuren,
pB) unsubstituierten oder substituierten aromatischen Diaminen,
pC) aliphatischen oder cycloaliphatischen Dicarbonsäuren,
pD) aliphatischen oder cycloaliphatischen Diaminen,
pE) Monocarbonsäuren,
pF) Monoaminen,
pG) mindestens dreiwertigen Aminen,
pH) Lactamen,
pl) ω-Aminosäuren,
pK) von pA) bis pl) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten pC) oder pD) vorhanden sein muss und keine der Komponenten pA) und pB) vorhanden sein darf. Für aliphatische Polyamide vom Typ PA Z (wie PA 6 oder PA 12) gilt die Maßgabe, dass mindestens die Komponente pH) vorhanden sein muss.

Eine weitere geeignete Ausführungsform sind teilaromatische Polyamide. Für teilaromatische Polyamide gilt die Maßgabe, dass mindestens eine der Komponenten pA) oder pB) und mindestens eine der Komponenten pC) oder pD) vorhanden sein muss.

Die aromatischen Dicarbonsäuren pA) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren pA) weisen vorzugsweise wenigstens einen (z.B. 1, 2, 3 oder 4) C₁-C₄-Alkylrest auf. Insbesondere weisen substituierte aromatischen Dicarbonsäuren pA) 1 oder 2 C₁-C₄-Alkylreste auf. Diese sind vorzugsweise ausgewählt unter Methyl, Ethyl, n-Propyl, Isopropyl, n-Butyl, iso-Butyl, sec-Butyl und tert-Butyl, besonders bevorzugt Methyl, Ethyl und n-Butyl, insbesondere Methyl und Ethyl und speziell Methyl. Substituierte aromatische Dicarbonsäuren pA) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure pA) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfo-isophthalsäure.

Besonders bevorzugt wird als aromatische Dicarbonsäure pA) Terephthalsäure, Isophthalsäure oder ein Gemisch aus Terephthalsäure und Isophthalsäure eingesetzt.

Bevorzugt weisen die teilaromatischen Polyamide einen Anteil von aromatischen Dicarbonsäuren an allen Dicarbonsäuren von wenigstens 50 mol%, besonders bevorzugt von 70 mol% bis 100 mol%, auf. In einer speziellen Ausführungsform weisen die teilaromatischen Polyamide einen Anteil an Terephthalsäure oder Isophthalsäure oder einem Gemisch aus Terephthalsäure und Isophthalsäure bezogen auf alle Dicarbonsäuren von wenigstens 50 mol%, bevorzugt von 70 mol% bis 100 mol%, auf.

Die aromatischen Diamine pB) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren pC) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Maleinsäure, Fumarsäure oder Itaconsäure, cis- und trans-Cyclohexan-1,2-dicarbonsäure, cis-und trans-Cyclohexan-1,3-dicarbonsäure, cis- und trans-Cyclohexan-1,4-dicarbonsäure, cis-und trans-Cyclopentan-1,2-dicarbonsäure, cis- und trans-Cyclopentan-1,3-dicarbonsäure und Mischungen davon.

Die aliphatischen oder cycloaliphatischen Diamine pD) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin pD) ausgewählt unter Hexamethylendiamin, 2-Methylpentamethylendiamin, Octamethylendiamin, Nonamethylendiamin, 2-Methyl-1,8-octamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin pD) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin pD) ausschließlich Hexamethylendiamin einpolymerisiert.

In einer weiteren speziellen Ausführung enthalten die teilaromatischen Polyamide als Diamin pD) ausschließlich Bis-(4-aminocyclohexyl)-methan einpolymerisiert.

In einer weiteren speziellen Ausführung enthalten die teilaromatischen Polyamide als Diamin pD) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin pD) ausschließlich Isophorondiamin (IPDA) einpolymerisiert.

Die aliphatischen und die teilaromatischen Polyamide können wenigstens eine Monocarbonsäure pE) einpolymerisiert enthalten. Die Monocarbonsäuren pE) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren pE) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Rizinus und Sonnenblume, Acrylsäure, Methacrylsäure, Versatic®-Säuren, Koch®-Säuren und Mischungen davon.

Werden als Monocarbonsäuren pE) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure pE) ausgewählt unter Essigsäure, Propionsäure, Benzoesäure und Mischungen davon.

In einer speziellen Ausführung enthalten die aliphatischen und die teilaromatischen Polyamide als Monocarbonsäure pE) ausschließlich Propionsäure einpolymerisiert.

In einer weiteren speziellen Ausführung enthalten die aliphatischen und die teilaromatischen Polyamide als Monocarbonsäure pE) ausschließlich Benzoesäure einpolymerisiert.

In einer weiteren speziellen Ausführung enthalten die aliphatischen und die teilaromatischen Polyamide als Monocarbonsäure pE) ausschließlich Essigsäure einpolymerisiert.

Die aliphatischen und die teilaromatischen Polyamide können wenigstens ein Monoamin pF) einpolymerisiert enthalten. Dabei enthalten die aliphatischen Polyamide nur aliphatische Monoamine oder alicyclische Monoamine einpolymerisiert. Die Monoamine pF) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine pF) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide kann zusätzlich wenigstens ein mindestens dreiwertiges Amin pG) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)-methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine pG) eingesetzt.

Geeignete Lactame pH) sind ε-Caprolactam, 2-Piperidon (δ-Valerolactam), 2-Pyrrolidon (γ-Butyrolactam), Capryllactam, Önanthlactam, Lauryllactam und Mischungen davon.

Geeignete ω-Aminosäuren pl) sind 6-Aminocapronsäure, 7-Aminoheptansäure, 11-Aminoundecansäure, 12-Aminododecansäure und Mischungen davon.

Geeignete von pA) bis pl) verschiedene, damit cokondensierbare Verbindungen pK) sind wenigstens dreiwertige Carbonsäuren, Diaminocarbonsäuren, etc.

Geeignete Verbindungen pK) sind weiterhin 4-[(Z)-N-(6-Aminohexyl)-C-hydroxy-carbonimido-yl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)-methyl]-C-hydroxy-carbonimidoyl]benzoesäure, 3-[(Z)-N-[(5-Amino-1,3,3-trimethyl-cyclohexyl)-methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

Bevorzugt ist das Polyamid A ausgewählt unter
PA 4, PA 5, PA 6, PA 7, PA 8, PA 9, PA 10, PA 11, PA 12,
PA 46, PA 66, PA 666, PA 69, PA 610, PA 612, PA 96, PA 99, PA 910, PA 912,
PA 1212, PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.1/8.T/8.1, PA 6.T/6.1/10.T/10.1,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T und Copolymeren und Gemischen davon.

In einer bevorzugten Ausführungsform enthält die erfindungsgemäße Polyamid-Zusammensetzung als Komponente A wenigstens ein aliphatisches Polyamid.

Das Polyamid ist dann vorzugsweise ausgewählt ist unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere ist das aliphatische Polyamid A ausgewählt unter PA 6, PA 66, PA 666 oder PA 12. Eine spezielle Ausführungsform sind Polyamid-Zusammensetzungen, bei denen die Komponente A PA 66 enthält oder aus PA 66 besteht.

In einer weiteren bevorzugten Ausführungsform dient das erfindungsgemäße Verfahren zur Herstellung eines teilaromatischen Polyamids.

Das Polyamid A ist dann vorzugsweise ausgewählt ist unter PA 6.T, PA 9.T,
PA 10.T, PA 12.T, PA 6.I, PA 9.I, PA 10.1, PA 12.I, PA 6.T/6.I, PA 6.T/6, PA6.T/8.T,
PA 6.T/10T, PA 10.T/6.T, PA 6.T/12.T, PA12.T/6.T, PA IPDA.I, PA IPDA.T,
PA 6.T/IPDA.T, PA 6.T/6.I/IPDA.T/IPDA.I, PA 6.T/10.T/IPDA.T,
PA 6.T/12.T/IPDA.T, PA 6.T/10.T/PACM.T, PA 6.T/12.T/PACM.T, PA 10.T/IPDA.T,
PA 12.T/IPDA.T und Copolymeren und Gemischen davon.

Die folgenden Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde beispielsweise PMMA als Polymerstandard mit einer niedrigen Polydispersität eingesetzt.

Das synthetische Polyamid A weist vorzugsweise ein zahlenmittleres Molekulargewicht Mₙ in
einem Bereich von 8000 bis 50000 g/mol, besonders bevorzugt von 10000 bis 35000 g/mol auf.

Das synthetische Polyamid A weist vorzugsweise ein gewichtsmittleres Molekulargewicht Mₙ in einem Bereich von 15000 bis 200000 g/mol, besonders bevorzugt von 20000 bis 125000 g/mol auf.

Die Polyamide A weisen vorzugsweise eine Polydispersität PD (= M_{w}/Mₙ) von höchstens 6, besonders bevorzugt von höchstens 5, insbesondere von höchstens 3,5, auf.

### Komponente B

Der erfindungsgemäß eingesetzte Chromkomplexfarbstoff B ist unter der Bezeichnung Solvent Black 28 erhältlich (CAS Nr.: 12237-23-9, C.I. Solvent Black 28). Ein kommerziell verfügbares Produkt ist Oracet Black 045 der Fa. BASF SE. Solvent Black 28 ist fast wasserunlöslich, in alkoholischen oder ketongruppenhaltigen organischen Lösungsmitteln jedoch gut löslich. Bei 20 °C liegt die Löslichkeit in Ethanol bei etwa 10 g/L und in Methylethylketon bei etwa 400 g/L.

Bevorzugt enthält die erfindungsgemäße Polyamid-Zusammensetzung den Chromkomplexfarbstoff B in einer Menge von 0,0003 Gew.-% bis 0,5 Gew.-%, besonders bevorzugt von 0,05 Gew.-% bis 0,3 Gew.-%, bezogen auf das Gesamtgewicht der Polyamid-Zusammensetzung.

### Komponente C

Als Komponente C enthalten die erfindungsgemäßen Zusammensetzungen 0,01 bis 1 Gew.-%, vorzugsweise 0,03 bis 0,5 Gew.-%, insbesondere 0,05 bis 0,3 Gew.-%, Ruß. Ruß (Carbon Black), auch als Industrieruß bezeichnet, ist eine Modifikation des Kohlenstoffs mit hohem Oberfläche-zu-Volumen-Verhältnis und besteht zu 80 bis 99,5 Gew.-% aus Kohlenstoff. Die spezifische Oberfläche von Industrieruß beträgt etwa 10 bis 1500 m²/g (BET). Der Ruß kann als Gasruß, Furnaceruß, Flammruß, Spaltruß oder Acetylenruß hergestellt sein. Der Korndurchmesser liegt im Bereich von 8 bis 500 nm, typischerweise 8 bis 110 nm. Ruß wird auch als Pigment Black 7 oder Lamp Black 6 bezeichnet. Farbruße sind nanoteilige Ruße, die durch ihre Feinheit zunehmend den braunen Grundton üblicher Ruße verlieren.

### Komponente D

Als Komponente D enthält die erfindungsgemäße Zusammensetzung 10 bis 65 Gew.-% Glasfasern, z.B. 15 bis 55 Gew.-% oder 20 bis 50 Gew.-% Glasfasern (wobei sich die Menge der Komponente A in diesen Beispielen entsprechend anpasst).

Speziell werden Schnittglasfasern eingesetzt. Insbesondere umfasst die Komponente D Glasfasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente D sogenannte "flache Glasfasern". Diese weisen speziell eine ovale oder elliptische oder eine mit Einschnürung(en) versehene elliptische (sog. "Kokon"- oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d.h. sie machen mehr als 50 Gew.-% der Gesamtmasse der Fasern aus.

Wenn als Komponente D Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z.B. A-, C-, D-, M-, S-, R-Glasfasern, oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z.B. Spritzgießen oder Pressen, zu Formteilen weiterverarbeitet werden.

### Komponente E

Als Komponente E enthalten die erfindungsgemäßen Zusammensetzungen 0 bis 50 Gew.-%, vorzugsweise 0 bis 30 Gew.-%, insbesondere 0 bis 10 Gew.-% weiterer Zusatzstoffe. Bei der Mitverwendung derartiger Zusatzstoffe beträgt die Mindestmenge 0,1 Gew.-%, vorzugsweise 1 Gew.-%, insbesondere 3 Gew.-%.

Bei Mitverwendung der Komponente E vermindert sich die Obergrenze der Komponente A entsprechend. Bei einer Mindestmenge von 0,1 Gew.-% der Komponente E beträgt so beispielsweise die Obergrenze der Menge der Komponente A 89,88 Gew.-%.

Als weitere Zusatzstoffe kommen von Glasfasern verschiedene Füll- und Verstärkungsstoffe, von Komponente A verschiedene thermoplastische Polymere oder weitere Additive in Betracht.

Der Begriff "Füllstoff und Verstärkungsstoff" (= mögliche Komponente E) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z.B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z.B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Kohlenstofffasern, Aramidfasern, Borfasern, Metallfasern oder Kaliumtitanatfasern.

Die von Komponente A verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkyl-estern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid ;
- Homo- und Copolymeren von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
- Polyethersulfonen;
- Cellulosealkylestern;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Es kann vorteilhaft sein, das Solvent Black 28 mit wenigstens einem weiteren Farbmittel (= Komponente E) zu kombinieren. Die Komponente E ist dann vorzugsweise ausgewählt unter von B und C verschiedenen nicht nukleierenden Farbmitteln. Dazu zählen nicht nukleierende Farbstoffe, nicht nukleierende Pigmente und Mischungen davon. Beispiele für nicht nukleierende Farbstoffe sind Solvent Yellow 21 (im Handel als Oracet® Yellow 160 FA von der Fa. BASF SE erhältlich) oder Solvent Blue 104 (im Handel als Solvaperm® Blue 2B von der Fa. Clariant erhältlich). Beispiele für nicht nukleierende Pigmente sind Pigment Brown 24 (im Handel als Sicotan® Yellow K 2011 FG von der Fa. BASF SE erhältlich). Auch kommen als Komponente E geringe Mengen wenigstens eines Weißpigments in Frage. Geeignete Weißpigmente sind Titandioxid (Pigment White 6), Bariumsulfat (Pigment White 22), Zinksulfid (Pigment White 7), etc. In einer speziellen Ausführung enthält die erfindungsgemäße Formmasse als Komponente E 0,001 bis 0,5 Gew.-% wenigstens eines Weißpigments. Beispielsweise kann die Formmasse 0,05 Gew.-% Titandioxid der Marke Kronos 2220 der Fa. Kronos enthalten.

Die Art und Menge der Zugabe richtet sich nach dem Farbton, d.h. der gewünschten Nuance des Schwarztones. Zum Beispiel kann mit Solvent Yellow 21 der Farbton des Schwarztones im CIELAB Farbraum von beispielsweise b* = -1,0 in Richtung +b*, also in Richtung Gelb verschoben werden. Dem Fachmann ist diese Methode als Farbnuancierung bekannt. Die Messung erfolgt nach DIN 6174 "Farbmetrische Bestimmung von Farbmaßzahlen und Farbabständen im angenähert gleichförmigen CIELAB-Farbenraum" bzw. der Nachfolgenorm.

Vorzugsweise enthält die erfindungsgemäße Zusammensetzung neben Komponenten B und C keine weiteren schwarz färbenden Farbstoffe oder Pigmente. Besonders bevorzugt enthält sie insgesamt keine weiteren Farbstoffe oder färbenden Pigmente

Geeignete bevorzugte Additive E sind Schmiermittel und Wärmestabilisatoren, aber auch Flammschutzmittel, Lichtschutzmittel (UV-Stabilisatoren, UV-Absorber oder UV-Blocker), Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente E können die erfindungsgemäßen Formmassen vorzugsweise 0,01 bis 3 Gew.-%, besonders bevorzugt 0,02 bis 2 Gew.-%, insbesondere 0,05 bis 1,0 Gew.-% mindestens eines Wärmestabilisators, bezogen auf das Gesamtgewichts Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der der Zusammensetzung.

Geeignete Verbindungen E des ein- oder zweiwertigen Kupfers sind z.B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard® A), Addukte aus Phenylendiamin mit Linolensäure, 4,4'-Bis(α,α-dimethylbenzyl)diphenylamin (Naugard® 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphos-phit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec® NC66 von BASF SE. Insbesondere bevorzugt wird eine Wärmestabilisierung ausschließlich auf Basis von CuI und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z.B. Eisen- oder Stahlpulver, zugesetzt.

Die erfindungsgemäßen Formmassen enthalten vorzugsweise 0 bis 30 Gew.-%, besonders bevorzugt 0 bis 20 Gew.-%, bezogen auf das Gesamtgewicht der Zusammensetzung, mindestens eines Flammschutzmittels als Additiv E. Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewicht der Zusammensetzung. Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP-A-1 095 030), Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z.B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

Die Herstellung der Polyamid-Formmassen erfolgt nach an sich bekannten Verfahren. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340°C, besonders bevorzugt von 240 bis 320°C und speziell von 250 bis 300 °C. Dem Fachmann sind die geeigneten Verfahren bekannt.

### Formkörper

Des Weiteren betrifft die vorliegende Erfindung Formkörper, die unter Verwendung von den erfindungsgemäßen Copolyamiden bzw. Polyamid-Formmassen hergestellt werden.

Die schwarz eingefärbten Polyamide können zur Herstellung von Formteilen mittels beliebiger geeigneter Verarbeitungstechniken verwendet werden. Geeignete Verarbeitungstechniken sind insbesondere Spritzgießen, Extrusion, Coextrusion, Tiefziehen oder jede andere bekannte Kunststoff-Formgebungsmethode. Diese und weitere Beispiele sind z.B. in "Einfärben von Kunststoffen", VDI-Verlag, ISBN 3-18-404014-3, zu finden.

Die nach dem erfindungsgemäßen Verfahren erhältlichen Polyamide eignen sich weiter vorteilhaft für eine Verwendung für Automobil-Anwendungen, zur Herstellung von Formteilen für Elektro- und Elektronikbauteilen, speziell auch im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenbereich für A-, B-, C- oder D-Säulenabdeckungen, Spoiler, Türgriffe, Außenspiegelkomponenten, Scheibenwischerkomponenten, Scheibenwischerschutzgehäuse, Ziergitter, Deckleisten, Dachreling, Fensterrahmen, Schiebedachrahmen, Antennenverkleidungen, Vor- und Rückleuchten, Motorabdeckungen, Zylinderkopfhauben, Ansaugrohre, Scheibenwischer sowie Karosserieaußenteile möglich.

Eine weitere spezielle Ausführungsform sind Formkörper als solche oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Für den Küchen- und Haushaltsbereich ist der Einsatz der erfindungsgemäßen Polyamide zur Herstellung von Komponenten für Küchengeräte, wie z.B. Fritteusen, Bügeleisen, Knöpfe, sowie Anwendungen im Garten-Freizeitbereich, z.B. Komponenten für Bewässerungssysteme oder Gartengeräte und Türgriffe, möglich.

Die Herstellung der Polyamid-Zusammensetzung zur Herstellung von Formteilen erfolgt nach an sich bekannten Verfahren. Auf die oben genannten Verfahren zur Herstellung der Polyamid-Zusammensetzung wird hier Bezug genommen. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 340°C, besonders bevorzugt von 240 bis 320°C und speziell von 250 bis 300°C. Es kann vorteilhaft sein, einzelne Komponenten vorzumischen. Es ist weiterhin auch möglich, die Formteile aus einer deutlich unterhalb der Schmelztemperatur des Polyamids hergestellten physikalischen Mischung (Dryblend) vorgemischter Komponenten und/oder einzelner Komponenten direkt herzustellen. Die Temperatur beim Mischen beträgt dann vorzugsweise 0 bis 100°C, besonders bevorzugt 10 bis 50°C, insbesondere Umgebungstemperatur (25°C). Die Formmassen können nach üblichen Verfahren, beispielsweise durch Spritzguss oder Extrusion, zu Formteilen verarbeitet werden. Sie eignen sich insbesondere beispielweise für Materialen für Deckel, Gehäuse, Anbauteile, Sensoren beispielsweise für Kfz-, Elektro-, Elektronik-,Telekommunikations-, Informationstechnologie-, Computer-, Haushalts-,Sport-, Medizin- oder Unterhaltungsanwendungen.

Die folgenden Beispiele dienen der Verdeutlichung der Erfindung, ohne sie in irgendeiner Weise zu beschränken.

### Beispiele

Die folgenden Einsatzstoffe wurden verwendet:
Polyamid-66: Ultramid® A27 der BASF SE, Schmelzpunkt: 264°C, Viskositätszahl (0.5% in 96 % H₂SO4): 150 cm³/g
Polyamid-6: Ultramid® B27 der BASF SE, Schmelzpunkt: 222°C, Viskositätszahl (0.5% in 96 % H₂SO₄): 150 cm³/g
Glasfaser: 3B - DS1125, Hersteller: 3B-FIBREGLASS S.P.R.L., mittlerer Durchmesser: 10,5 µm, Länge: 4 mm
Glasfaser: NEG-T249H, Hersteller: NIPPON ELECTRIC GLASS (MALAYSIA) SDN. BHD., mittlerer Durchmesser: 10,5 µm, Länge: 3 mm
Nigrosin/Solvent Black 7: Hersteller: COLLOIDS LTD.
Solvent Black 28: Oracet BK 045, Hersteller: BASF SE
Ruß (Spezialschwarz 4): Hersteller: Orion Engineered Carbons GmbH
Wärmestabilisator: CuI/KI im Molverhältnis 1:4
Schmiermittel: EBS, Hersteller: Lonza Cologne GmbH

Die in der nachstehenden Tabelle 1 angegeben Inhaltsstoffe wurde in einem Taumelmischer für 10 Minuten vorgemischt und dann über einen Zweiwellenextruder mit Durchmesser 25 mm und einem L/D-Verhältnis von 44 bei 300 °C Zylindertemperatur extrudiert und granuliert. Das naturfarbene Polyamidgranulat wurde hierzu vorher in einem Trockenofen bei 100 °C für vier Stunden getrocknet, so dass der Feuchtigkeitsgehalt bei unter 0,1 % lag. Das erhaltene Granulat wurde auf einer Spritzgussmaschine bei 300 °C Massetemperatur zu 2 mm dicken Plättchen der Dimension 60 x 60 mm verspritzt und sowohl visuell als auch messtechnisch beurteilt. Die mechanischen Eigenschaften wurden gemäß DIN ISO 527 bzw. 179-2/1 eU bzw. 179-2/1 eAf in der 2016 gültigen Fassung bestimmt.

**Tabelle 1**

| Zusammensetzung | Vergleich 1 | Vergleich 2 | Vergleich 3 | Beispiel 1 | Vergleich 4 | Vergleich 5 | Vergleich 6 | Beispiel 2 |
|---|---|---|---|---|---|---|---|---|
| PA 66 (ULT. A27) | 63,8 | 64,2 | 64,4 | 64,3 | | | | |
| PA6 (ULT. B27) | | | | | 69,2 | 68,1 | 69 | 69 |
| Glasfaser (3B - DS1125) | 35 | 35 | 35 | 35 | | | | |
| Glasfaser (NEG - T249H) | | | | | 30 | 30 | 30 | 30 |
| Solvent Black 7 (Nigrosin) | 0,76 | 0,2 | 0 | 0 | 0,3 | 0,4 | 0,2 | |
| Solvent Black 28 (Oracet BK 045) | 0 | 0 | 0 | 0,1 | 0 | 0 | 0 | 0,1 |
| RUSS (Spezialschwarz 4) | 0 | 0,1 | 0,1 | 0,1 | 0 | 1 | 0,1 | 0,1 |
| Wärmestabilisator (CuI/KI) | 0,13 | 0,13 | 0,13 | 0,13 | 0,28 | 0,28 | 0,3 | 0,3 |
| Schmiermittel (EBS) | 0,35 | 0,35 | 0,35 | 0,35 | 0,2 | 0,2 | 0,2 | 0,2 |

Die Messung der Fließspirale erfolgte durch eine BASF-interne Methode, bei der über eine Spritzgussmaschine bei konstanter Temperatur und konstantem Einspritzdruck ein spiralförmiges Werkzeug gefüllt wird, bis die Schmelze einfriert. Die Fließweglänge lässt sich dann direkt am so erhaltenen Probenkörper ablesen.

Die Messung der Oberflächenrauigkeit (arithmetischer Mittenrauwert Rₐ, quadratischer Mittenrauwert R_{q} und gemittelte Rautiefe R_{z}) erfolgte durch ein Veeco NT9300 Weißlicht-Interferometer. Die Glanzmessung erfolgte gemäß DIN ISO 8254-1 mit dem Handgerät micro-gloss 75 von BYK-Gardner GmbH aus Geretsried. Es wurde der höchste Glanzwert aus zwanzig einfachen Messungen herangezogen.

Der Laserkontrastwert wurde gemäß DIN 66236 ermittelt. Die Laserbeschriftung kann beispielsweise mit einem Laser FOBA DP50 erfolgen, bei dem es sich um einen diodengepumpten Nd:YAG-Laser mit Wellenlängen von 1064 nm oder 532 nm handelt. Die typische Laserleistung beträgt 50 W. Der Luminanzwert kann beispielsweise mit einem Minolta Luminance Meter LS-110 ermittelt werden. Dabei handelt es sich um ein SLR-Spot-Leuchtdichte-Messgerät für die Messung von Lichtquellen- und Oberflächenhelligkeiten. Der Messwinkel beträgt 1/3°, der Betrachtungswinkel 9°. Als optisches System kommt ein 85 mm f/2.8 Objektiv mit einem SLR-Betrachtungssystem zum Einsatz. Der Streulichtfaktor liegt unter 1,5 %.

Der Kontrastwert beschreibt den Intensitätsunterschied zwischen dem hellsten und dunkelsten Punkt eines KTE-Rasters und des Untergrundes. Für die Berechnung der Kontrastwerte werden die ermittelten maximalen bzw. minimalen Luminanzwerte für Beschriftung und Untergrund herangezogen.

Der Luminanzwert wurde durch ein Minolta Luminance Meter LS-110 ermittelt.

Die Messergebnisse sind in der nachstehenden Tabelle 2 zusammengefasst.

Aus den Ergebnissen geht hervor, dass nur für die erfindungsgemäße Kombination von Solvent Black 28 und Ruß sowohl eine gute Schlagzähigkeit wie auch gute Luminanz- und Glanzwerte ermittelt wurden und gleichzeitig hohe Laserkontrastwerte bestimmt wurden.

**Tabelle 2**

| Einheit | | DIN | ISO | Vergleich 1 | Vergleich 2 | Vergleich 3 | Beispiel 1 | Vergleich 4 | Vergleich 5 | Vergleich 6 | Beispiel 2 |
|---|---|---|---|---|---|---|---|---|---|---|---|
| **Produktmerkmale** | | | | | | | | | | | |
| Dichte | g/cm³ | 53479 | 1183 | 1.411 | 1.411 | 1.411 | 1.411 | 1.350 | 1.350 | 1.350 | 1.350 |
| VZ (0,005 g/ml H₂SO₄) | cm³/g | 53727 | 307 | 144 | 156 | 144 | 152 | 151 | 151 | 155 | 154 |

| **Mechanische Eigenschaften (trocken)** | | | | | | | | | | | |
|---|---|---|---|---|---|---|---|---|---|---|---|
| Zug-E-Modul | MPa | | 527 | 11287 | 11330 | 11400 | 11405 | 9481 | 9677 | 9644 | 9421 |
| Bruchspannung | MPa | | 527 | 208 | 208 | 190 | 199 | 182 | 178 | 178 | 171 |
| Bruchdehnung | % | | 527 | 3,0 | 3,3 | 2,6 | 3,4 | 4,2 | 3,7 | 3,7 | 3,8 |
| Charpy Schlagzähigk. | kJ/m² | | 179-2/1eU | 90 | 89 | 73 | 89 | 98 | 87 | 91 | 92 |
| Charpy Kerbschlagzähigk. | kJ/m² | | 179-2/1 eAf | 11,7 | 11,4 | 9,7 | 10,7 | 12,9 | 11,9 | 12,1 | 11,7 |

| **Weitere Eigenschaften** | | | | | | | | | | | |
|---|---|---|---|---|---|---|---|---|---|---|---|
| Fließspirale 2mm (Einspritzdruck 100 Bar) | cm | | | 78 | 69 | 71 | 70 | 75 | 66 | 64 | 67 |
| Fließspirale 2mm (Einspritzdruck 150 Bar) | cm | | | 105 | 88 | 98 | 96 | 95 | 93 | 85 | 90 |
| Oberflächenrauigkeit (Rₐ/R_{q}/R_{z}) | | | | 0,8/1,8/73 | 1,2/2,2/77 | 3,0/4,2//103 | 1,4/2,5/83 | - - | - - | - - | - - |
| Glanzmessung 75° | | | 8254-1 | 76,7 | 75,4 | 71,4 | 74,6 | 93,2 | 93,7 | 94,4 | 95,7 |
| Laserkontrastwert (KTE) | | | | 3,8 | 11,8 | 19,8 | 17,5 | 7,4 | 11,4 | 19,0 | 32,3 |
| Laserkontrastwert | | 66236 | | 73,3 | 91,5 | 94,9 | 94,3 | 86,5 | 91,2 | 94,7 | 96,9 |
| Luminanzwert (max. Helligkeit der Beschriftung in cd/m²) | | | | 30 | 106 | 257 | 210 | 37 | 57 | 95 | 194 |

## Patentansprüche

1. Polyamid-Zusammensetzung, enthaltend
a) 34,98 bis 89,98 Gew.-% wenigstens eines synthetischen Polyamids als Komponente A und
b) 0,01 bis 1,0 Gew.% eines Chromkomplexfarbstoffes, ausgewählt unter den Verbindungen der Formeln A1), A2) und A3) und Mischungen aus 2 oder 3 dieser Verbindungen 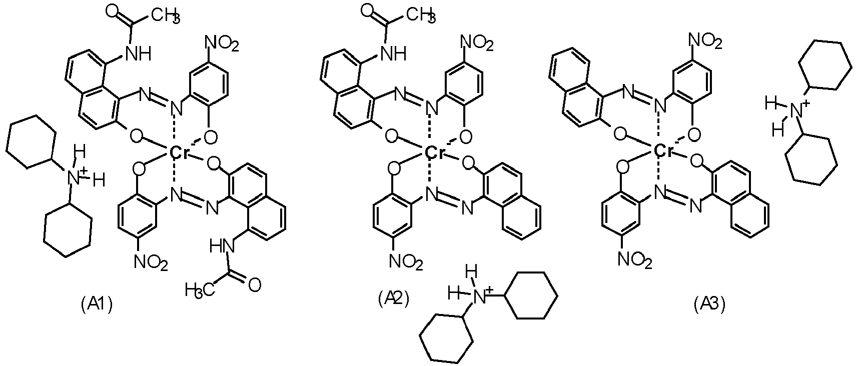 als Komponente B,
c) 0,01 bis 1 Gew.-% Ruß als Komponente C,
d) 10 bis 65 Gew.-% Glasfasern als Komponente D,
e) 0 bis 50 Gew.-% weiterer Zusatzstoffe als Komponente E,
wobei sich die Mengenangaben, deren Summe 100 Gew.-% ergibt, auf die gesamte Zusammensetzung beziehen und die Zusammensetzung maximal 0,05 Gew.-% Nigrosin enthält.

2. Polyamid-Zusammensetzung nach Anspruch 1, **dadurch gekennzeichnet, dass** die Zusammensetzung maximal 0,03 Gew.-%, vorzugsweise maximal 0,01, besonders bevorzugt kein Nigrosin enthält.

3. Polyamid-Zusammensetzung nach Anspruch 1 oder 2, **dadurch gekennzeichnet, dass** die Zusammensetzung neben Komponenten B und C keine weiteren schwarz färbenden Farbstoffe oder Pigmente, vorzugsweise keine weiteren Farbstoffe oder färbenden Pigmente, enthält.

4. Polyamid-Zusammensetzung nach einem der Ansprüche 1 bis 3, **dadurch gekennzeichnet, dass** die Menge der Komponenten C und D jeweils und unabhängig voneinander 0,03 bis 0,5 Gew.-%, vorzugsweise 0,05 bis 0,3 Gew.-%, beträgt.

5. Polyamid-Zusammensetzung nach einem der Ansprüche 1 bis 4, **dadurch gekennzeichnet, dass** als Komponente E Schmiermittel und Wärmestabilisatoren in Mengen von jeweils 0,05 bis 1,0 Gew.-%, bezogen auf die gesamte Zusammensetzung, eingesetzt werden.

6. Polyamid-Zusammensetzung nach einem der Ansprüche 1 bis 5, wobei das Polyamid ausgewählt ist unter PA 4, PA 5, PA 6, PA 7, PA 8, PA 9, PA 10, PA 11, PA 12,
PA 46, PA 66, PA 666, PA 69, PA 610, PA 612, PA 96, PA 99, PA 910, PA 912,
PA 1212, PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.1, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.1/8.T/8.1, PA 6.T/6.1/10.T/10.1,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T und Copolymeren und Gemischen davon, vorzugsweise wobei das Polyamid ausgewählt ist unter PA 6, PA 66, PA 666 und PA 12, insbesondere wobei das Polyamid PA66 ist.

7. Polyamid-Zusammensetzung nach einem der Ansprüche 1 bis 6, wobei die Komponente E mindestens ein Polymer einhält, ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono-und Dicarbonsäuren, und Maleinsäureanhydrid;
- Homo- und Copolymeren von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
- Polyethersulfonen;
- Cellulosealkylestern;
und Mischungen davon, vorzugsweise ausgewählt unter Styrol-Copolymeren, Polyalkyl(meth)acrylaten, Polycarbonaten und Mischungen davon.

8. Verwendung einer Polyamid-Zusammensetzung, wie in einem der Ansprüche 1 bis 7 definiert, zur Herstellung von schwarz eingefärbten laserbeschreibbaren Polyamid-Formkörpern mit hoher Temperaturstabilität, zur Herstellung von Formteilen für den Einsatz bei Kraftfahrzeugen, Haushaltsgeräten, Elektrogeräten, Zierleisten und Außenverkleidungen.

9. Formkörper, hergestellt aus einer Polyamid-Formmasse nach einem der Ansprüche 1 bis 7.

10. Verfahren zur Herstellung einer Polyamidzusammensetzung, wie in einem der Ansprüche 1 bis 7 definiert, bei dem man wenigstens ein synthetisches Polyamid A, wenigstens einen Chromkomplexfarbstoff B, Ruß C und gegebenenfalls weitere Additive unter Erwärmung auf eine Temperatur im Bereich von 160 bis 340°C miteinander vermischt.

## Claims

1. A polyamide composition comprising
a) from 34.98 to 89.98% by weight of at least one synthetic polyamide as component A and
b) from 0.01 to 1.0% by weight of a chromium complex dye selected from the compounds of the formulae A1), A2) and A3) and mixtures of two or three of these compounds 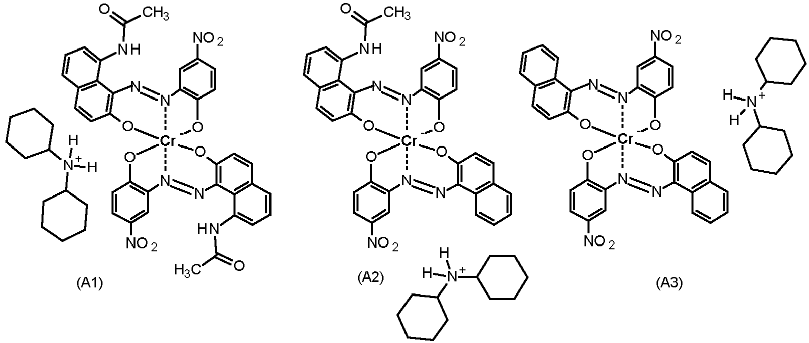 a
s component B,
c) from 0.01 to 1% by weight of carbon black as component C,
d) from 10 to 65% by weight of glass fibers as component D,
e) from 0 to 50% by weight of other additional substances as component E,
where the quantities stated, which give a total of 100% by weight, are based on the entire composition and the composition comprises at most 0.05% by weight of nigrosin.

2. The polyamide composition according to claim 1, wherein the composition comprises at most 0.03% by weight of nigrosin, preferably at most 0.01% by weight, particularly preferably no nigrosin.

3. The polyamide composition according to claim 1 or 2, wherein the composition comprises, alongside components B and C, no other black-coloring dyes or pigments, preferably no other dyes or coloring pigments.

4. The polyamide composition according to any of claims 1 to 3, wherein the quantity of components C and D respectively and mutually independently is from 0.03 to 0.5% by weight, preferably from 0.05 to 0.3% by weight.

5. The polyamide composition according to any of claims 1 to 4, wherein lubricants and heat stabilizers are used as component E in quantities of respectively from 0.05 to 1.0% by weight, based on the entire composition.

6. The polyamide composition according to any of claims 1 to 5, where the polyamide is selected from PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912,
PA 1212, PA 6.T, PA 9.T, PA 8.T, PA 10.T, PA 12.T, PA 6.I, PA 8.I, PA 9.I, PA 10.I, PA 12.I, PA 6.T/6, PA 6.T/10, PA 6.T/12,
PA 6.T/6.I, PA 6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T and copolymers and mixtures thereof,
preferably where the polyamide is selected from PA 6, PA 66, PA 666 and PA 12, in particular where the polyamide is PA 66.

7. The polyamide composition according to any of claims 1 to 6, where component E comprises at least one polymer selected from
- homo- or copolymers which comprise, in copolymerized form, at least one monomer selected from C₂-C₁₀ monoolefins, for example ethylene or propylene, 1,3-butadyene, 2-chloro-1,3-butadyene, vinyl alcohol and its C₂-C₁₀-alkyl esters, vinyl chloride, vinylidene chloride, vinylidene fluoride, tetrafluoroethylene, glycidyl acrylate, glycidyl methacrylate, acrylates and methacrylates having alcohol components of branched and unbranched C₁-C₁₀-alcohols, vinyl aromatics, for example styrene, acrylonitrile, methacrylonitrile, α,β-ethylenically unsaturated mono- and dicarboxylic acids, and maleic anhydride;
- homo- and copolymers of vinyl acetals;
- polyvinyl esters;
- polycarbonates (PC);
- polyesters, for example polyalkylene terephthalates, polyhydroxyalkanoates (PHA), polybutylene succinates (PBS), polybutylene succinate adipates (PBSA);
- polyethers;
- polyetherketones;
- thermoplastic polyurethanes (TPU);
- polysulfides;
- polysulfones;
- polyether sulfones;
- cellulose alkyl esters;
and mixtures thereof, preferably selected from styrene copolymers, polyalkyl (meth)acrylates, polycarbonates and mixtures thereof.

8. The use of a polyamide composition as defined in any of claims 1 to 7 for the production of black-colored laser-inscribable polyamide moldings with high heat resistance for the production of moldings for use in motor vehicles, in household equipment, in electrical devices, and in decorative strips and external cladding.

9. A molding produced from a polyamide molding composition according to any of claims 1 to 7.

10. A process for the production of a polyamide composition as defined in any of claims 1 to 7, where at least one synthetic polyamide A, at least one chromium complex dye B, carbon black C and optionally other additives are mixed with one another with heating to a temperature in the range from 160 to 340°C.

## Revendications

1. Composition de polyamide, contenant :
a) 34,98 à 89,98 % en poids d'au moins un polyamide synthétique en tant que composant A et
b) 0,01 à 1,0 % en poids d'un colorant complexe de chrome, choisi parmi les composés des formules A1), A2) et A3) et les mélanges de 2 ou 3 de ces composés 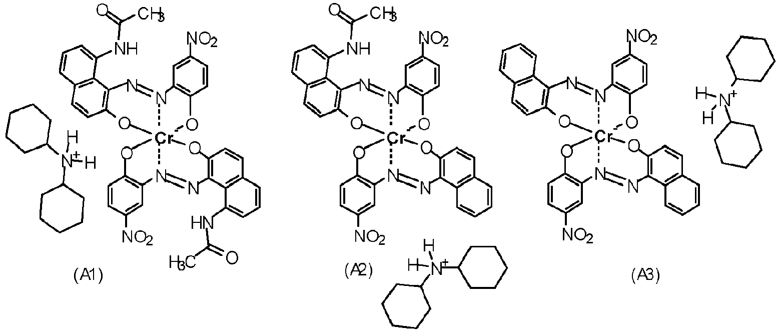 en tant que composant B,
c) 0,01 à 1 % en poids de noir de carbone en tant que composant C,
d) 10 à 65 % en poids de fibres de verre en tant que composant D,
e) 0 à 50 % en poids d'additifs supplémentaires en tant que composant E,
les données de quantité, dont la somme est de 100 % en poids, se rapportant à la composition totale, et la composition contenant au plus 0,05 % en poids de nigrosine.

2. Composition de polyamide selon la revendication 1, **caractérisée en ce que** la composition contient au plus 0,03 % en poids, de préférence au plus 0,01, de manière particulièrement préférée pas de nigrosine.

3. Composition de polyamide selon la revendication 1 ou 2, **caractérisée en ce que** la composition ne contient en plus des composants B et C pas d'autres colorants ou pigments colorant en noir, de préférence pas d'autres colorants ou pigments colorants.

4. Composition de polyamide selon l'une quelconque des revendications 1 à 3, **caractérisée en ce que** la quantité des composants C et D est respectivement et indépendamment l'un de l'autre de 0,03 à 0,5 % en poids, de préférence de 0,05 à 0,3 % en poids.

5. Composition de polyamide selon l'une quelconque des revendications 1 à 4, **caractérisée en ce que** des lubrifiants et des stabilisateurs thermiques sont utilisés en tant que composant E en quantités de respectivement 0,05 à 1,0 % en poids, par rapport à la composition totale.

6. Composition de polyamide selon l'une quelconque des revendications 1 à 5, **caractérisée en ce que** le polyamide est choisi parmi PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, PA 6.T, PA 9.T, PA 8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA 6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T et les copolymères et mélanges de ceux-ci,
le polyamide étant de préférence choisi parmi PA 6, PA 66, PA 666 et PA 12, le polyamide étant notamment PA 66.

7. Composition de polyamide selon l'une quelconque des revendications 1 à 6, dans laquelle le composant E contient au moins un polymère, choisi parmi :
- les homo- ou copolymères, qui contiennent sous forme polymérisée au moins un monomère qui est choisi parmi les monooléfines en C₂-C₁₀, telles que par exemple l'éthylène ou le propylène, le 1,3-butadiène, le 2-chloro-1,3-butadiène, l'alcool vinylique et ses esters alkyliques en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et méthacrylates avec des composants alcools d'alcools en C₁-C₁₀ ramifiés et non ramifiés, les composés aromatiques de vinyle, tels que par exemple le styrène, l'acrylonitrile, le méthacrylonitrile, les acides mono-et dicarboxliques α,β-éthyléniquement insaturés, et l'anhydride de l'acide maléique ;
- les homo- et copolymères de vinylacétals ;
- les polyesters de vinyle ;
- les polycarbonates (PC) ;
- les polyesters, tels que les polyalkylène téréphtalates, les polyhydroxyalcanoates (PHA), les polysuccinates de butylène (PBS), les polysuccinates-adipates de butylène (PBSA) ;
- les polyéthers ;
- les polyéther-cétones ;
- les polyuréthanes thermoplastiques (TPU) ;
- les polysulfures ;
- les polysulfones ;
- les polyéther-sulfones ;
- les esters alkyliques de cellulose ;
et les mélanges de ceux-ci, de préférence choisi parmi les copolymères de styrène, les poly(méth)acrylates d'alkyle, les polycarbonates et les mélanges de ceux-ci.

8. Utilisation d'une composition de polyamide, telle que définie dans l'une quelconque des revendications 1 à 7, pour la fabrication de corps moulés en polyamide colorés en noir, inscriptibles par laser, à stabilité thermique élevée, pour la fabrication de pièces moulées destinées à une utilisation dans des véhicules automobiles, des appareils ménagers, des appareils électriques, des moulures et des habillages extérieurs.

9. Corps moulé, fabriqué à partir d'un matériau de moulage polyamide selon l'une quelconque des revendications 1 à 7.

10. Procédé de fabrication d'une composition de polyamide, telle que définie dans l'une quelconque des revendications 1 à 7, selon lequel au moins un polyamide synthétique A, au moins un colorant complexe de chrome B, du noir de carbone C et éventuellement des additifs supplémentaires sont mélangés les uns avec les autres avec chauffage à une température dans la plage allant de 160 à 340 °C.
